**Europäisches Patentamt**

**European Patent Office**

**Office européen des brevets**

(19)

(11) Publication number: **0 150 520**
**B1**

(12) # EUROPEAN PATENT SPECIFICATION

(45) Date of publication of patent specification: **09.12.87**

(51) Int. Cl.⁴: **B 62 D 9/00**

(21) Application number: **84200862.5**

(22) Date of filing: **14.06.84**

(54) **Hydraulic control device for steering the pivotable wheels of vehicles provided with straight travelling stabilizer.**

(30) Priority: **19.01.84 IT 6705284**

(43) Date of publication of application:
**07.08.85 Bulletin 85/32**

(45) Publication of the grant of the patent:
**09.12.87 Bulletin 87/50**

(84) Designated Contracting States:
**AT BE CH DE FR GB LI LU NL SE**

(56) References cited:
**EP-A-0 079 088**
**CH-A-396 652**
**DE-A-1 580 655**
**DE-A-2 544 078**
**DE-A-3 145 618**

(73) Proprietor: **Perlini, Roberto**
**Corso Venezia, 93**
**I-37047 S. Bonifacio (Verona) (IT)**

(72) Inventor: **Perlini, Roberto**
**Corso Venezia, 93**
**I-37047 S. Bonifacio (Verona) (IT)**

(74) Representative: **Robba, Eugenio**
**Studio "INTERPATENT" via Caboto 35**
**I-10129 Turin (IT)**

Courier Press, Leamington Spa, England.

# Description

The present invention relates to a hydraulic control device for steering wheels of vehicles provided with straight travelling stabilizer.

More particularly, the invention relates to an oleodynamic control device for steering rear wheels acted upon by a straight travelling stabilizer and a hydraulic steering actuator through an articulated arm.

In some patents rear wheel steering systems are described, particularly for industrial vehicles, in which such pivotable wheels are subjected both to the action of a straight travelling stabilizer and a hydraulic actuator cylinder which exerts forces for modifying the straight travelling condition imposed by said stabilizer to thus determine steering of the wheels.

Swiss Patent No. 396,652 relates to such a system which comprises a double-acting hydraulic cylinder which through a double fluid conduit controls a steering actuator cylinder. In a straight travelling situation the piston of the control cylinder occupies a position exactly in the centre of the cylinder and is connected to the steering system of the vehicle so that each variation from straight travelling causes the piston to shift from said central position, which causes actuation of the actuator cylinder and steering of the wheels. As in such a system the hydraulic circuit which communicates with the control cylinder and the actuator cylinder is always under pressure, there being even provided accumulator means for maintaining a certain value of such pressure, it happens that the least variation of the main steering system from the straight driving attitude causes steering of the rear wheels. The same effect occurs when there is some play in the connection between the piston of the control cylinder and the main steering system or when use and wear of the piston cause fluid to leak through said cylinder or when there is an imperfect setting of the mechanical members involved in the transmission of movement to the piston. In all these cases, which are practically unavoidable, the system in question exhibits the serious disadvantage of causing undesired steering of the rear wheels with the obvious consequences of side skidding and the risk of coming off the road. This is all the more grave when one considers that there are always small oscillations in the main steering system when the vehicle is running at relatively high speed so that in this case undesired steering of the rear wheels is even more dangerous.

Another system for steering pivotable wheels with straight travelling stabilizer and hydraulic actuator is described in the Italian Patent Application No. 68427-A/81 filed 5 November 1981 in the name of the same Applicant (corresponding to EP—A—0079088). Although this system does not comprise accumulator means adapted to maintain the pressure in the hydraulic circuit high, as described in Swiss Patent No. 396,652, it is open to the same type of criticism as the control cylinder is such as to cause undesired steering of the wheels in the same situation as outlined above.

It is therefore the object of the present invention to eliminate the disadvantages of the known systems described above and to provide a hydraulic control device for steering pivotable wheels subject to the action of a straight travelling stabilizer, which will ensure straight travelling stabilization of such wheels even for small steering movements of the main steering system and will also ensure stabilization when play develops in the connection between the control member and the main steering system.

The above and other objects and advantages of the invention, which will become apparent from the following description, are achieved by a hydraulic control device for steering pivotable wheels of motor vehicles provided with an automatic straight travelling stabilizer and a hydraulic steering actuator connected by a double hydraulic circuit to the device, which comprises a member having a cylindrical geometry and a chamber of variable volume for slidably receiving a movable wall element which in a straight travelling attitude occupies a central position in said chamber and is actuated by steering of the vehicle, characterized in that in said central position and in the vicinity thereof a fluid connection to a reservoir is provided, whereby a discharge of pressure for any movement of said movable element within the range of said vicinity of the central position is obtained.

The invention will now be illustrated in the accompanying drawings given by way of a non-limiting example and in which:

Fig. 1 is a schematic perspective view of the steering system incorporating the device of the invention in the case of a three-axle vehicle;

Fig. 2 illustrates an axial section of a portion of the device of the invention in a first embodiment;

Figs. 3 and 4 schematically illustrate the device of Figs. 1 and 2 in two different positions of operation;

Fig. 5 schematically illustrates, partly in section, the front portion of a vehicle with a second embodiment of the device of the invention;

Figs. 6 and 7 illustrate in axial section a third embodiment of the device of the invention in two different positions of operation;

Fig. 8 illustrates in axial section a fourth embodiment of the device of the invention;

Figs. 9 and 10 schematically illustrate in plan view two steering attitudes of a three-axle vehicle incorporating the device of the invention;

Figs. 11 and 12 illustrate in section two different arrangements of a by-pass valve which can be associated with the device of the invention;

Fig. 13 schematically illustrates in a perspective view the steering device incorporating the device of the invention in the case of a semitrailer with fifth wheel steering.

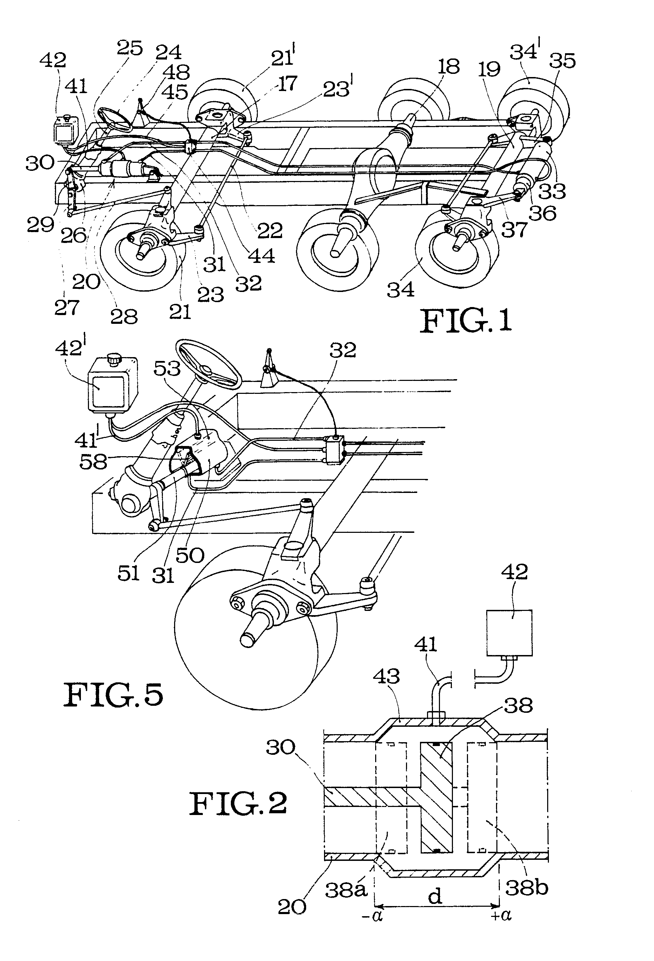

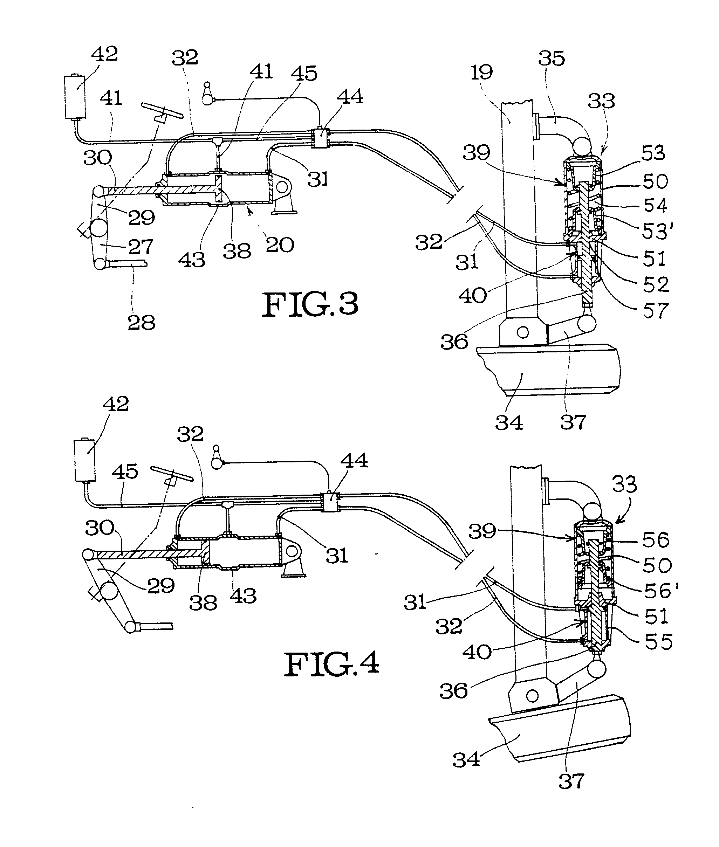

With reference to Fig. 1 there is schematically shown the steering system of a three-axle vehicle, typically an industrial vehicle, incorporating the hydraulic control device 20 according to the invention. Pivotally mounted on the front axle 17 are the steerable running wheels 21, 21' which are connected to each other by the transverse rod 22 and the articulated arms 23, 23' and controlled by a steering wheel 24 through a steering column 25, steering gear box 26, steering control arm 27 and longitudinal rod 28 as is known in the art. Pivotally connected to the steering control arm 27 is another arm 29 which in turn is pivotally connected to a rod 30 of a piston slidable within a cylinder 20 which constitutes the hydraulic control device according to the invention and which will be described in detail hereinafter. From the control cylinder 20, which is double-acting, extend two conduits 31, 32 which conduct the fluid from the cylinder 20 to a device 33 which is shown in detail in Figs. 3 and 4 and described in the aforementioned Italian Patent Application No. 68427-A/81 in the name of the same Applicant (EP—A—0079088). The device 33 incorporates a straight travelling stabilizer for the wheels 34, 34' and a shifting actuator capable of steering the wheels which are pivotally mounted on the axle 19. In fact, the device 33 is pivotally mounted on a bracket 35 secured to the axle housing 19 and a rod 36 projects therefrom which is articulated to an arm 37 acting on the wheels. On the other hand, the wheels of the drive axle 18 are fixed. In such a vehicle, steering of the wheels 34, 34' is controlled by the device 20 which is responsive to the variations of attitude of the steerable running wheels 21, 21'.

Considering also Figs. 2 and 3, which latter Figure schematically illustrates the device 20 connected to the device 33, it will be seen that when the vehicle is in a straight travelling attitude, the piston 38 is in a position corresponding to the centre line of the cylinder 20.

When the main steering system of the vehicle firmly maintains the straight travelling attitude, the piston 38 of the control cylinder 20 remains in the intermediate position shown, so that no fluid pressure is generated in the conduits 31 and 32. The device 33 consists of a stabilizer 39 or "permanent elastic energy loading unit" which applies to the wheels of the axle 19 stabilizing forces greater than those of the external forces acting on the wheels so that the wheels will maintain their straight driving attitude until the other constituent of the device 33, i.e. the shifting actuator 40, is set into operation, which is a double-acting hydraulic cylinder connected through the conduits 31 and 32 to the control device 20.

In the preferred embodiment, the stabilizer 39 and the shifting actuator 40 are constructed as a single member 33, as shown in Figures 3 and 4. The stabilizer 39 consists of a hollow housing 50 having an inner transverse wall 51 provided with a central hole 52. A pair of axially spaced, hollow, cup-shaped elements 53, 53' are accommodated in the housing 50 and are urged against the longitudinally spaced end walls of the housing by a helical spring 54. Disposed adjacent to the housing 50, externally of the inner end wall 51 thereof, is a hydraulic cylinder 55, which constitutes the shifting actuator 40. The piston rod 36 extends through the hydraulic cylinder 55 and through the hole 52 in wall 51 into the housing 50. Disposed on the portion of the rod 36 received in the housing 50 is a pair of spaced projections 56, 56', which function to react against the hollow elements 53, 53'. Mounted on the portion of the rod 36 extending through cylinder 55 is an annular projection 57, which constitutes the piston of cylinder 55. The outer end of rod 36 projects from cylinder 55 and is articulated to the arm 37 acting on the wheels 34, 34'.

When the control device 20 is actuated, i.e. when fluid under pressure is fed thereto through the conduit 31 or 32, it exerts on the wheels forces that are greater than those exerted by the stabilizer 39 so that the wheels 34, 34' can be steered. In the situation of Figs. 2 and 3 it has been said that no fluid under pressure is fed to actuator 40 so that there is no steering of the wheels 34, 34'.

At the centre line of the control cylinder 20 according to the invention there is provided a conduit 41 which provides a by-pass for the fluid to a reservoir 42 indicated schematically. Further, at the centre line and in the vicinity thereof the control cylinder 20 has a thickened profile 43 wherein the piston 38 is no longer sealingly guided, but permits the fluid to flow into the by-pass conduit 41 and discharge into the reservoir 42.

According to this basic feature of the invention, shown in detail in Fig. 2, thus a range $d$ is formed around the centre line of the control cylinder 20, in which the piston 38 may pass from the position 38a to the position 38b in a stroke that does not produce any fluid pressure because of the by-pass to the reservoir. Consequently, those small variations of the driving attitude of the main steering system, which result in shifting of the piston within said range around the centre line, do not cause any steering of the wheels 34, 34' pivotally mounted on the axle 19.

On the contrary, Fig. 4 illustrates a situation corresponding to actual steering of the front steerable wheels, which through rotation of the arm 29 results in a stroke of the piston 38 beyond the area 43. This induces a fluid pressure through the conduit 32 and consequent actuation of the actuator 40 whose rod 36 articulated to the arm 37 sets the wheels 34, 34' in a curved path attitude by overcoming the elastic reaction of the stabilizer 39.

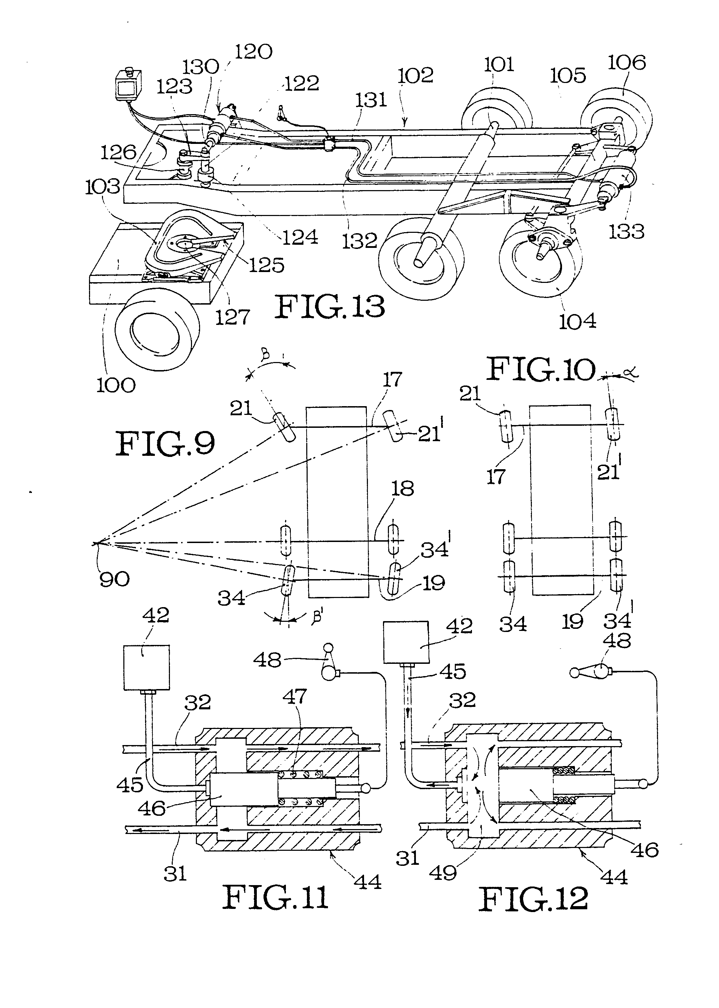

In the described steering system advantageously a by-pass valve 44 may be associated with the control device according to the invention, with this by-pass valve connected to the reservoir 42 through the conduit 45. This valve, which is known per se, is shown in section in Figs. 11 and 12.

In the operative situation of Fig. 11, the piston 46 of the valve which is biased by the spring 47, closes the conduit 45 so that the fluid can flow through the conduits 31 and 32 to activate the shifting actuator 40 as a function of the position of the piston in the control cylinder 20. On the other hand, Fig. 12 shows a retracted position of the piston 46, which may be obtained by means of a hand control member 48 placed, for example, near the driver in the driver's cab as shown in Fig. 1. In the situation of Fig. 12, the fluid is by-passed through the by-pass chamber 49 to the reservoir 42 so that pressure on the actuator 40 is released and the wheels of the axle 19 are kept in a fixed position independently of the operative position of the piston in the control cylinder 20. The usefulness of this option will be discussed hereinafter.

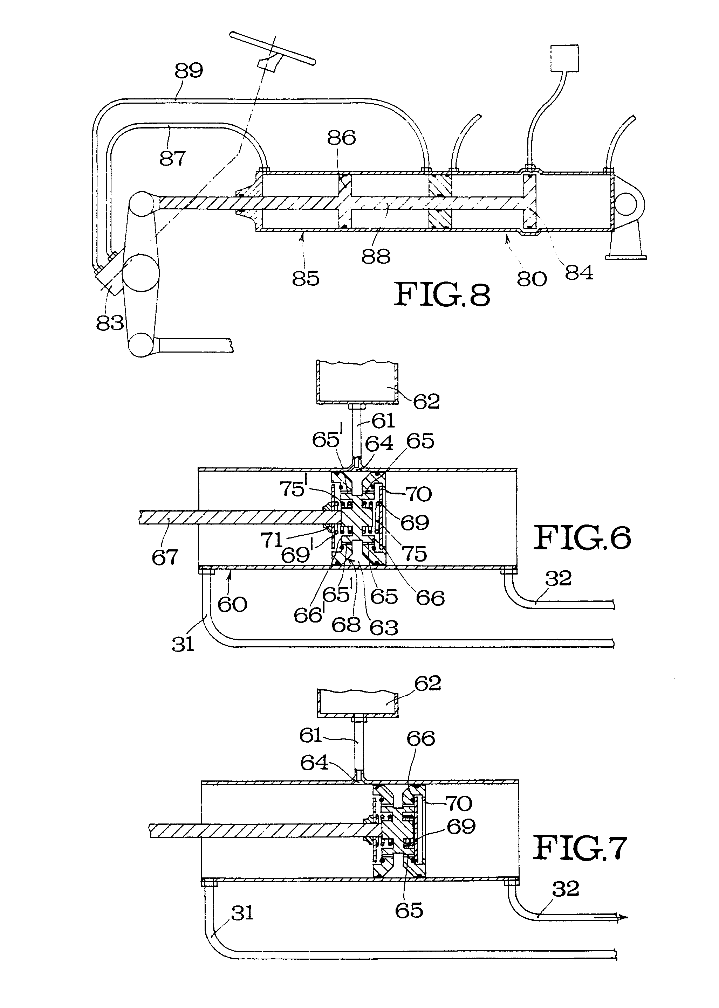

Fig. 5 shows the front portion of a vehicle with a second embodiment of the steering control device according to the invention. In this case the control device is a semicylinder 50 in the interior of which a rotatably movable element or blade 58 is accommodated, this element being keyed to a rotatable shaft 51 which is set into rotation by the changes in the straight travelling attitude of the main steering system the component parts of which will no longer be described as they are identical to those of Fig. 1.

The blade 58 is mounted for sealingly sliding along the walls of the semicylinder 50 which, however, is provided with a thickened portion 53 around the centre line of the semicylinder, which permits the fluid to flow into the by-pass conduit 41' which leads to the reservoir 42'. In the straight travelling attitude of the steerable wheels, the blade 58 is in an exactly vertical position and therefore permits the fluid to flow into the reservoir; the same may happen in the entire range around the centre line in which the blade still faces the thickened portion 53, analogously to what has been described above with regard to the thickened portion 43 of the cylinder 20.

Figs. 6 and 7 illustrate a third embodiment of the hydraulic control device according to the invention in two different positions of operation. Here the device has the form of a double-acting cylinder 60 with a reciprocatable element 68. Provided along the centre line of the cylinder 60 is a flow port 64 which through a by-pass conduit 61 leads to the reservoir 62 which is only partially shown. A funnel-shaped groove 63 is provided in the piston 68 so as to form an annular chamber into which the fluid may flow through holes 65, 65' which communicate said annular chamber with the opposed faces 66, 66' of the piston. Two helical springs 75, 75' are arranged coaxially to the rod 67 and carry two caps 69, 69' which in the situation of operation shown in Fig. 6 are urged one against a stop ring 70 formed integrally with the piston 68 and the other against a foot 71 firmly secured to the rod 67.

In Fig. 6 the piston 68 occupies a position in the centre line of the cylinder 60, which corresponds to the straight travelling attitude of the main steering system. In this position the fluid can flow through the apertures 65, 65' into the port 64 and from there into the conduit 61 and the reservoir 62, providing the by-pass to the reservoir. The by-pass condition is also maintained over a certain range in the vicinity of the centre line as the piston 68 may effect a certain stroke before the caps 69, 69' are urged by the fluid pressure in the cylinder against one of the faces 66, 66' of the piston and close the holes 65, 65' which permit the fluid to be by-passed to the reservoir 62.

Fig. 7 shows the position assumed by the system when the steerable wheels are actually steered.

The stroke of the piston 68 to the right in this case causes the cap 69 to be urged against the face 66 and the holes 65 to be closed. In this situation the annular chamber 63 no longer communicates with the port 64 and the conduit 61 so that the system is no longer by-passed to the reservoir 62; therefore, the fluid under pressure is fed through the conduit 32 to the shifting actuator which causes steering of the wheels pivotally mounted on the rear axle.

Fig. 8 shows a fourth embodiment of the hydraulic control device according to the invention. This embodiment comprises a cylinder 80 similar to that of Figs. 1 to 4, but incorporating a power steering device 85 in the form of another parallel cylinder with a piston 86 carried by the same rod 88 of the cylinder 80. The fluid under pressure which is fed to the power steering device 85 from the steering gear box 83 through the lines 87, 89 provides the power for shifting the piston 86 and thus the piston 84 of the cylinder 80 to increase the steering forces transmitted manually by the driver to the system.

Obviously the power steering device may be associated with any of the described embodiments of the hydraulic control device and with any equivalent embodiments.

By referring to Figs. 9 and 10 the operation of the steering system incorporating the hydraulic control device according to the invention may be resumed.

Fig. 9 schematically shows a vehicle with three axles 17, 18 and 19 of the type shown in Fig. 1. To obtain correct turning, i.e. without skidding, the extensions of the axes of rotation (indicated by dash-and-dot lines) of the individual wheels must meet at the swing centre 90. Therefore, the wheels 34, 34' pivotally mounted on the axle 19 must rotate through an angle $\beta'$ which is a function of the angle $\beta$ defined by the rotation of the steerable wheels 21, 21'.

However when, as shown in Fig. 10, the wheels 21, 21' rotate through an angle $\alpha$ which is much smaller than $\beta$, the system thanks to the characteristics of the control device according to the invention does not cause steering of the rear wheels 34, 34' and maintains the axle 19 in the condition of a fixed axle. Considering also Fig. 2 again, it will be understood that the value of the angle $\alpha$, for which there is no steering of the rear wheels, depends upon the width "d" of the by-pass range 43 as over this entire range the pressure on the shifting actuator of the rear wheels is zero.

The advantage of the device according to the invention therefore consists in that it prevents the minor corrections of the driving path, which occur also in straight driving, and the minor shiftings in the connections of the steering controls from being duplicated by the steering response of the controlled axle or axles with consequent instability of the vehicle or a risk of it suddenly leaving the path that it follows.

The range within which the state of straight running of the wheels 34, 34' continues can be measured in degrees of steering where the value of the angle is a function of the width of the by-pass range $\alpha = f(d)$.

It is evident that by-passing and thus excluding the system, by manual or automatic control, as the case may be, will permit to travel with the wheels 34, 34' stabilized for straight driving for any condition of the ground, i.e. snow, ice. etc.

The hydraulic control device according to the invention may also be used for steering the axle or axles of a semi-trailer as shown in Fig. 13. A portion of the tractor vehicle here is indicated by 100 and comprises a fifth wheel attachment 103. The semitrailer 102 comprises a fixed axle 101 and an axle 105 with pivotally mounted wheels 104, 106 the steering of which is obtained by a device 133 in a manner completely analogous to the device 33 of Fig. 1.

The shifting actuator contained in the device 133 is connected from the double hydraulic circuit 131, 132 to an oleodynamic steering control device 120 completely analogous to the previously described device 20 (or 50 or 60). The rod 130 projecting from the device 120 is pivotally connected to a rod 122 having a cylindrical enlarged portion 124 engaging the recess 125 of the fifth wheel 103. Further, an arm 123 is pivotally connected with one end to the rod 122 and with the other end to a rod 126 inserted in the central hole 127 of the fifth wheel 103. Thus, steering of the tractor vehicle causes a reciprocating movement of the rod 130. In fact, the walls of the recess 125, which are always in contact with the cylindrical enlarged portion 124, shift the rod 122 about a fulcrum located on the rod 126—and the rod 130 which is pivotally connected to the rod 122.

Also in this case the control device 120 feeds fluid under pressure to the device 133 only for strokes of the piston, carried by the rod 130, which go beyond the by-pass range described previously.

Thus, the following conditions of operation may be analyzed:
a) driving in a curve;
b) driving along a straight path;
b') driving (along a straight path) with slight shiftings;
c) driving with the system excluded;
d) failure of the hydraulic circuit (oleodynamic system);

a) Driving in a curve (Figs. 4, 7, 9)

Under these conditions the system ensures movement on predetermined and controlled paths.

In fact, the steering action is introduced by the main steering system of the vehicle or by the fifth wheel attachment for semitrailers or trailers, into the right-hand or left-hand control circuit which can be combined in one double-acting control cylinder; depending on the side of steering, this circuit, in the proportion imposed by the main system, transmits the hydraulic action to the actuator 40 which, overcoming the effect of the permanent elastic energy charging unit 39, causes progressive, predetermined and controlled shifting of the wheels 34, 34', 104, 106 by the angular values predetermined by the system as a function of the steering radius or the swing centre (Fig. 9).

When the action of the control forces exerted by the pressure of the hydraulic circuit acting on the actuator 40 has ceased, the stabilizing forces of the permanent elastic energy charging unit 39 in the stabilizer return the assembly to the straight travelling attitude, i.e. at the end of the curve the condition of the wheels stabilized for straight travelling is recovered.

b) Driving along a straight path (Figs. 2, 3, 6, 8)

As under this condition the action of the main steering system is missing, the following takes place:
—the double control circuit 31, 32 and 131, 132 discharges the fluid to the reservoir 42, 42' and thus is in by-pass;
—the oleodynamic pressure on the actuator 40 is zero;
—the permanent elastic energy charging unit 39 applies to the wheels pivotally mounted on the axles 19, 105 stabilizing forces which in terms of absolute value are higher than the external forces and keep the wheels in the condition of wheels stabilized for straight driving.

b') Driving (along a straight path) with slight shiftings (Figs. 2 and 10)

In the presence of small shifting variations due to correction of the position of the steering wheel with the vehicle running at a considerable speed, steering is effected only on the steerable running wheels and not on the wheels of the controlled rear axle so as to avoid dangerous instabilities. The practical result of the concept is that for values of small degrees ($\alpha$) of the steering angle (Fig. 10) of the steerable running wheels, the wheels of the controlled axle are not steered but maintain their straight attitude.

The condition just described thus applies to the range

$$-\alpha \longleftrightarrow 0 \longleftrightarrow +\alpha$$

c) Driving with the system excluded (Fig. 12)

In this case there is an illustrative example of exclusion of the system by means of a manually controlled by-pass valve 44.

By actuation of an appropriate control member (48), which may be operated manually or automatically or be of any desired construction, the fluid from the circuits (31 and 32) is by-passed to the reservoir (42) whereby the pressure is neutralized and the condition of the previous cases of a fixed axle with wheels stabilized for straight travelling is re-established.

The possibility of excluding the system may be particularly useful in certain conditions of the ground as with snow, ice, etc. or for particular manoeuvres.

d) Failure of the oleodynamic system

In case of failure of one or both control circuits 31 and 32 which permit steering, the pressure in the circuit is neutralized so that the condition of the wheels stabilized for straight travelling is maintained by the permanent elastic energy charging unit 39.

It is evident that a preferred embodiment of the invention has been described which has been given only by way of a non-limiting example, but that this embodiment is susceptible of numerous modifications and variations within the scope of the following claims.

**Claims**

1. Hydraulic control device for steering pivotable wheels of motor vehicles provided with an automatic straight travelling stabilizer (39) and a hydraulic steering actuator (40) connected by a double hydraulic circuit (31, 32) to the device which comprises a member having a cylindrical geometry (20) and a chamber of variable volume for slidably receiving a movable wall element (38) which in a straight travelling attitude occupies a central position in said chamber and is actuated by steering of the vehicle, characterized in that in said central position or in the vicinity thereof a fluid connection to a reservoir (42) is provided, whereby a discharge of pressure for any movement of said movable element (38) within the range (d) of said vicinity of the central position is obtained.

2. Hydraulic steering control device according to claim 1, characterized in that it comprises a hydraulic cylinder (20) with a movable element constituted by a reciprocating piston (38), said fluid connection to a reservoir (42) being provided by an enlargement (43) along the centre line of said cylinder (20), and in the vicinity thereof, with a fluid port to a conduit (41) leading to said reservoir (42).

3. Hydraulic steering control device according to claim 1, characterized in that it comprises a hydraulic cylinder (60) with a movable element constituted by a reciprocating piston (68) at the periphery of which there is provided an annular chamber (63) communicating with the opposed faces of the piston (68) through ports (65, 65') which can be closed by caps (69, 69') biased by springs (75, 75') axially supported by the piston (68) and in that a port (64) is provided in the centre line of said cylinder (60) for communication with a conduit (61) leading to a fluid reservoir (62).

4. Hydraulic device according to the preceding claim, characterized in that the axial movement of said caps (69, 69') is limited by stops (70, 71) provided on said piston (68).

5. Hydraulic steering control device according to claim 1, characterized in that said member having a cylindrical geometry is a semicylinder (50) with a reciprocating movable element constituted by a blade (58) carried by a bar (51) rotating with the steering members, with an enlargement (53) provided in the centre line of said semicylinder (50) to define a chamber with ports for communication with a conduit (41') leading to a fluid reservoir (42').

6. Hydraulic steering control device according to claims 1, 2 and 3, characterized in that it comprises a power steering device (85) constituted by a double-acting hydraulic cylinder provided in an extension of the cylinder (80) forming the hydraulic control device so that the piston (86) of said steering device (85) and the piston (84) of the cylinder (80) forming the hydraulic control device are carried by one rod (88).

7. Hydraulic steering control device according to claim 1, characterized in that said automatic straight travelling stabilizer (39) and said hydraulic steering actuator (40) are constructed as a single member constituted by

(a) a housing (50) pivotally mounted on a bracket (35) secured to an axle housing;

(b) a hydraulic cylinder (55) disposed adjacent to and coaxially with said housing (50);

(c) a rod (36) disposed slidably within the hydraulic cylinder (55), said rod (36) having an inner end portion extending into the housing (50) and having an outer end portion projecting from the hydraulic cylinder (55) and connected to said pivotable wheels;

(d) a piston (57) disposed on the rod internally of the hydraulic cylinder (55);

(e) a pair of axially spaced hollow elements (53, 53') disposed slidably on the rod (36) internally of the housing (50);

(f) elastic means (54) located internally of said housing (50) to act against said hollow elements (53, 534) and,

(g) spaced projections (56, 56') disposed on the rod internally of the housing (50).

8. Hydraulic steering control device according to claim 7, characterized in that said elastic means (54) is a helical spring disposed intermediate of the spaced hollow elements (53, 53').

**Patentansprüche**

1. Hydraulische Steuervorrichtung zum Steuern der schwenkbaren Räder von Kraftfahrzeugen, die mit einem automatischen Stabilisator (39) zum Geradeausfahren und einer hydraulischen Steuer-Betätigungsvorrichtung (40) versehen sind, die durch einen doppelten Hydraulikkreis (32, 32) mit der Vorrichtung verbunden ist, die ein Glied mit zylindrischer Geometrie (20) und einer Kammer von veränderlichem Volumen zur verschiebbaren Aufnahme eines beweglichen Wandelements (38) aufweist, das in einer Geradeausfahrt-Stellung eine Mittelstellung in der genannten Kammer einnimmt und durch Steuern des Fahrzeugs betätigt wird, dadurch gekennzeichnet, dass in der genannten Mittelstellung oder in deren Nähe eine Flüssigkeitsverbindung zu einem Vorratsbehälter (42) hergestellt wird, wodurch eine Druckentladung bei jeder Bewegung des genannten beweglichen Elementes (38) innerhalb des Bereiches (d) der genannten Nähe von der Mittelstellung erreicht wird.

2. Hydraulische Steuer- und Betätigungsvorrichtung nach Anspruch 1, dadurch gekennzeichnet, dass sie einen Hydraulikzylinder (20) mit einem beweglichen Wandelement aufweist, das aus einem hin- und hergehenden Kolben (38) besteht, wobei die genannte Flüssigkeitsverbindung zu einem Vorratsbehälter (42) durch eine Vergrösserung (43) auf der Mittellinie des genannten Zylinders (20) und in dessen Nähe geschaffen wird, und eine Flüssigkeitsöffnung zu einer Leitung (41) vorgesehen ist, die zu dem genannten Vorratsbehälter (42) führt.

3. Hydraulische Steuer- und Betätigungsvorrichtung nach Anspruch 1, dadurch gekennzeichnet, dass sie einen Hydraulikzylinder (60) mit einem beweglichen Wandelement aufweist, das aus einem hin- und hergehenden Kolben (68) besteht, an dessen Peripherie eine Ringkammer vorgesehen ist (63), die mit den einander gegenüberliegenden Flächen des Kolbens (68) über Öffnungen (65, 65') in Verbindung steht, die durch Kappen (69, 69') geschlossen werden können, die durch in axialer Richtung von dem Kolben (68) getragene Federn (75, 75') vorgespannt sind, und dass auf der Mittellinie des genannten Zylinders (60) eine Öffnung (64) zur Herstellung einer Verbindung mit einer zu einem Flüssigkeitsvorratsbehälter (62) führenden Leitung (61) vorgesehen ist.

4. Hydraulische Vorrichtung nach dem vorhergehenden Anspruch dadurch gekennzeichnet, dass die Axialbewegung der genannten Kappen (69, 69') durch auf dem genannten Kolben (68) vorgesehene Anschläge (70, 71) begrenzt ist.

5. Hydraulische Steuer- und Betätigungsvorrichtung nach Anspruch 1, dadurch gekennzeichnet, dass das genannte Glied mit zylindrischer Geometrie aus einem Halbzylinder (50) mit einem hin- und herbeweglichen Element besteht, das seinerseits aus einem Blatt (58) besteht, das von einer Stange (51) getragen wird, die sich zusammen mit den Steuergliedern dreht, wobei auf der Mittellinie des genannten Halbzylinders (50) eine Vergrösserung (53) vorgesehen ist, um eine Kammer mit Öffnungen zur Herstellung einer Verbindung zu einer zu einem Flüssigkeitsvorratsbehälter (42') führenden Leitung (41') zu bilden.

6. Hydraulische Steuer- und Betätigungsvorrichtung nach den Ansprüchen 1, 2 und 3, dadurch gekennzeichnet, dass sie eine Kraftsteuervorrichtung (85) aufweist, die aus einem doppeltwirkenden hydraulischen Zylinder besteht, der auf der Verlängerung des die hydraulische Steuervorrichtung bildenden Zylinders (80) vorgesehen ist, so dass der Kolben (86) der genannten Steuervorrichtung (85) und der Kolben (84) des die hydraulische Steuervorrichtung bildenden Zylinders (80) durch eine einzige Stange (88) getragen werden.

7. Hydraulische Steuer- und Betätigungsvorrichtung nach Anspruch 1, dadurch gekennzeichnet, dass der genannte automatische Stabilisator (39) zum Geradeausfahren und die genannte hydraulische Steuer- Betätigungsvorrichtung (40) als ein einziges Glied ausgebildet sind, das aus folgenden Teilen besteht:

(a) einem Gehäuse (50), das schwenkbar auf einem Lagerarm gelagert ist (35), der an einem Achsgehäuse befestigt ist;

(b) ein hydraulischer Zylinder (55), der neben dem genannten Gehäuse (50) koaxial dazu angeordnet ist;

(c) eine Stange (36), die verschiebbar in dem hydraulischen Zylinder (55) angeordnet ist, wobei die genannte Stange (36) einen sich in das Gehäuse (50) erstreckenden inneren Endteil und einen äusseren Endteil aufweist, der von dem hydraulischen Zylinder (55) vorsteht und mit den genannten schwenkbaren Rädern verbunden ist;

(d) ein Kolben (57), der auf der Stange innerhalb des hydraulischen Zylinders (55) angeordnet ist;

(e) ein Paar von in axialer Richtung im Abstand voneinander angeordneten Hohlelementen (53, 53'), die innerhalb des Gehäuses (50) auf der Stange (36) verschiebbar angeordnet sind;

(f) elastische Mittel (54), die innerhalb des genannten Gehäuses (50) derart angebracht sind, dass sie sich auf den genannten Hohlelementen (53, 534) abstützen, und

(g) im Abstand voneinander angeordnete Vorsprünge (56, 56'), die auf der Stange innerhalb des Gehäuses (50) angeordnet sind.

8. Hydraulische Steuer- und Betätigungsvorrichtung nach Anspruch 7, dadurch gekennzeichnet, dass die genannten elastischen Mittel (54) aus einer Schraubenfeder bestehen, die in einer Mittelstellung zwischen den im Abstand voneinander angeordneten Hohlelementen (53, 53') angebracht ist.

**Revendications**

1. Dispositif de commande hydraulique pour diriger les roues orientables des véhicules à moteur munis d'un stabilisateur automatique de tenue de cap (39) et d'un organe hydraulique d'actionnement de direction (40) relié par un double circuit hydraulique (31, 32) au dispositif qui comporte une organe à géométrie cylindrique (20) et une chambre à volume variable pour recevoir, de façon glissante, un élément à paroi mobile (38) qui, dans une position de déplacement en ligne droite, occupe une position centrale dans ladite chambre et est actionné par la direction du véhicule, caractérisé en ce que dans ladite position centrale ou à sa proximité, est prévue une liaison de fluide vers un réservoir (42), de telle manière que l'on obtient une décharge de pression pour tout déplacement dudit élément mobile (38) à l'intérieur de la fourchette (d) de ladite proximité de la position centrale.

2. Dispositif de commande hydraulique de direction selon la revendication 1, caractérisé en ce qu'il comporte un vérin hydraulique (20) muni d'un élément mobile constitué d'un piston alternatif (38), ladite liaison de fluide vers un réservoir (42) étant réalisée par un élargissement (43) sur la ligne centrale dudit vérin (20) et à sa proximité relié à un orifice de fluide vers une conduite (41) conduisant audit réservoir (42).

3. Dispositif de commande hydraulique de direction selon la revendication 1, caractérisé en ce qu'il comporte un vérin hydraulique (60) muni d'un élément mobile constitué d'un piston à déplacement alternatif (68) à la périphérie duquel est prévue une chambre annulaire (63) reliée aux faces opposées du piston (68) par des orifices (65, 65') qui peuvent être obturés par des bouchons (69, 69') repoussés par des ressorts (75, 75') axialement supportés par le piston (68) et en ce qu'un orifice (64) est prévu sur la ligne centrale dudit vérin (60) pour être relié à une conduite (61) conduisant à un réservoir de fluide hydraulique (62).

4. Dispositif de commande hydraulique de direction selon la revendication précédente, caractérisé en ce que le déplacement axial desdits bouchons (69, 69') est limité par des butées (70, 71) prévues sur ledit piston (68).

5. Dispositif de commande hydraulique de direction selon la revendication 1, caractérisé en ce que ledit organe présentant une géométrie cylindrique est un demi cylindre (50) muni d'un élément mobile à déplacement alternatif constitué par une lame (58) portée par un barreau (51) tournant avec les organes de direction, muni d'un élargissement (53) prévu sur la ligne centrale dudit demi cylindre (50) pour définir une chambre avec des orifices destinés à être reliés à une conduite (41') conduisant à un réservoir de fluide (42').

6. Dispositif de commande hydraulique de direction selon les revendications 1, 2 et 3, caractérisé en ce qu'il comporte un dispositif de direction assistée (85) constitué par un vérin hydraulique à double action prévu dans un prolongement du vérin (80) formant le dispositif de commande hydraulique de telle façon que le piston (86) dudit dispositif de direction (85) et le piston (84) du vérin (8) constituant le dispositif de commande hydraulique soient supportés par une tige (88).

7. Dispositif de commande hydraulique de direction selon la revendication 1, caractérisé en ce que ledit stabilisateur automatique de tenue de cap (39) et ledit organe d'actionnement hydraulique de direction (40) sont réalisés sous la forme d'une organe unique constitué par:

(a) une enveloppe (50) montée à pivotement sur un support (35) fixé à un carter d'essieu;

(b) un vérin hydraulique (55) disposé adjacent et coaxial à ladite enveloppe (50);

(c) une tige (36) disposée glissante à l'intérieur dudit vérin hydraulique (55), ladite tige (36) présentant une partie d'extrémité intérieure s'étendant à l'intérieur de l'enveloppe (50) et munie d'une partie d'extrémité extérieure faisant saillie à l'extérieur du vérin hydraulique (55) et relié auxdites roues orientables;

(d) un piston (57) disposé sur la tige à l'intérieur du vérin hydraulique (55);

(e) deux éléments creux espacés axialement (53, 53') montés de façon glissante sur la tige (36) à l'intérieur de l'enveloppe (50);

(f) un moyen élastique (54) disposé à l'intérieur de ladite enveloppe (50) pour agir à l'encontre desdits éléments creux (53, 534); et

(g) des saillies espacées (56, 56') disposées sur la tige, à l'intérieur de l'enveloppe (50).

8. Dispositif de commande hydraulique de direction selon la revendication 7, caractérisé en ce que ledit moyen élastique (54) est un ressort hélicoïdal disposé entre les éléments creux espacés (53, 53').

0 150 520

FIG.1

FIG.5

FIG.2

1

FIG.3

FIG.4

FIG.8

FIG.6

FIG.7

FIG.13

FIG.9

FIG.10

FIG.11

FIG.12